## Europäisches Patentamt
## European Patent Office
## Office européen des brevets

(11) Veröffentlichungsnummer: **0 284 940 B1**

# EUROPÄISCHE PATENTSCHRIFT

(45) Veröffentlichungstag der Patentschrift: **18.09.91**

(51) Int. Cl.⁵: **G05G 1/04**, F16K 35/02

(21) Anmeldenummer: **88104471.3**

(22) Anmeldetag: **21.03.88**

(54) **Handhebel.**

(30) Priorität: **01.04.87 DE 3710982**

(43) Veröffentlichungstag der Anmeldung:
**05.10.88 Patentblatt 88/40**

(45) Bekanntmachung des Hinweises auf die
Patenterteilung:
**18.09.91 Patentblatt 91/38**

(84) Benannte Vertragsstaaten:
**CH DE FR GB IT LI**

(56) Entgegenhaltungen:
**DE-A- 2 043 529**
**GB-A- 786 511**
**GB-A- 859 611**
**US-A- 1 463 333**
**US-A- 2 206 456**

(73) Patentinhaber: **Müller, Fritz**
**Neuer Wasen 6**
**W-7118 Ingelfingen-Criesbach(DE)**

(72) Erfinder: **Müller, Fritz**
**Neuer Wasen 6**
**W-7118 Ingelfingen-Criesbach(DE)**

(74) Vertreter: **Leyh, Hans, Dr.-Ing. et al**
**Patentanwälte Berendt, Leyh & Hering Innere**
**Wiener Strasse 20**
**W-8000 München 80(DE)**

**Beschreibung**

Die Erfindung betrifft einen Handhebel, der in vorbestimmte Stellungen mittels eines durch eine Betätigungsklinke ein- und ausrückbares Rastelement arretierbar ist, mit einem ersten Hebelteil, das mit einem zu betätigenden Element verbunden ist, und einem zweiten Hebelteil, das mittels der Betätigungsklinke relativ zum ersten Hebelteil längsverschieblich ist, und das an seinem dem Element zugewandten Ende das Rastelement trägt, wobei die Betätigungsklinke am freien Ende des Handhebels schwenkbeweglich am ersten Hebelteil gelagert und in ihrer Arretierstellung federvorbelastet ist.

Aus der US-A-1 463 333 ist ein Handhebel der vorstehend genannten Art bekannt.

Dieser Handhebel ist konstruktiv sehr aufwendig gestaltet und seine einzelnen Teile liegen frei, so daß sowohl Verletzungsgefahr für eine Bedienungsperson als auch Beschädigungsgefahr für den Handhebel selbst besteht.

Aus der GB-A-859 611 ist ein Handhebel aus zwei Hebelteilen bekannt, wobei der eine Hebelteil innerhalb des anderen Hebelteils angeordnet ist und der innere Hebelteil relativ zum äußeren Hebelteil längsverschieblich ist zur Betätigung einer Rasteinrichtung. Ein Teil des inneren Hebelteiles und ein Teil der Rasteinrichtung stehen aber über den äußeren Hebelteil vor, weshalb Verletzungs- und Beschädigungsgefahr zwar vermindert aber immer noch vorhanden sind.

Der Erfindung liegt demgegenüber die Aufgabe zugrunde, einen Handhebel der eingangs beschriebenen Art so weiterzubilden, daß er sich bequem mit einer Hand bedienen läßt bei weiterer Reduzierung einer Verletzungs- oder Beschädigungsgefahr.

Nach der Erfindung wird dies dadurch erreicht, daß das zu betätigende Element eine Einrichtung ist, die mit einer Klappe in einer Rohrleitung fest verbunden ist, daß das erste Hebelteil innerhalb des zweiten Hebelteils angeordnet ist und daß die Betätigungsklinke in einem Abstand von ihrer Schwenklagerung eine Nase hat, die das äußere Hebelteil mitnimmt.

Weitere Merkmale der Erfindung ergeben sich aus den Unteransprüchen.

Die Erfindung wird nachstehend an einem bevorzugten Ausführungsbeispiel unter Bezugnahme auf die beigefügte Zeichnung näher erläutert.

Darin zeigt

Fig. 1 eine Längsschnittansicht eines Handhebels nach der Erfindung und

Fig. 2 eine Draufsicht auf den Handhebel nach Fig. 1 mit einer Teilschnittdarstellung zur Verdeutlichung der Rasteinrichtung.

In den Figuren der Zeichnung ist insgesamt mit 1 ein Handhebel in seiner bevorzugten Ausführungsform nach der Erfindung bezeichnet.

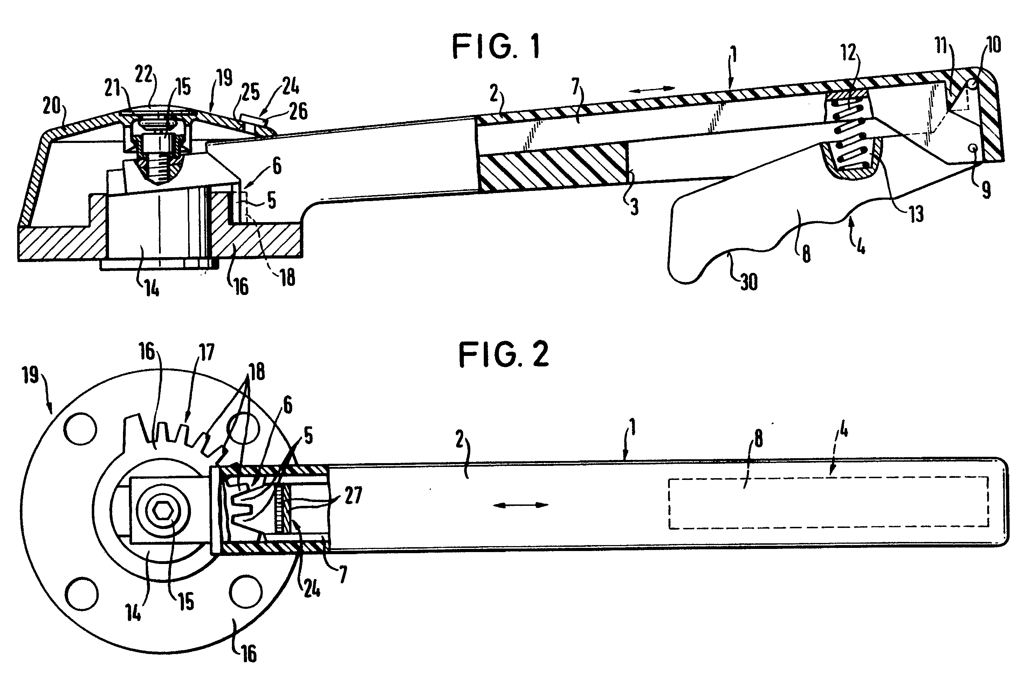

Dieser Handhebel 1 hat ein äußeres Hebelteil 2, das, wie dargestellt, zweckmäßigerweise aus Kunststoff besteht und als geschlossenes Gehäuse ausgebildet ist. An der Unterseite des äußeren Hebelteils 2 ist eine Öffnung 3 vorgesehen, die eine insgesamt mit 4 bezeichnete Betätigungseinrichtung aufnimmt. Wie sich insbesondere aus Fig. 1 in Verbindung mit Fig. 2 entnehmen läßt, weist das vordere Ende des äußeren Hebelteils 2 zwei Vorsprünge oder Zähne 5 auf, die das bewegliche Rastelement einer insgesamt mit 6 bezeichneten Rasteinrichtung bilden. In den vom äußeren Hebelteil 2, der in Form eines Gehäuses ausgelegt ist, gebildeten Innenraum ist ein innteres Hebelteil 7 eingesetzt, das zweckmäßigerweise aus Metall besteht und einen U-Profil-Querschnitt hat. An diesem inneren Hebelteil 7 ist die Betätigungseinrichtung 4 angebracht, die eine Betätigungsklinke 8 aufweist, die in der in Fig. 1 gezeigten Arretierungsstellung etwas aus der Öffnung 3 an der Unterseite des Handhebels 1 vorsteht. Diese Betätigungsklinke ist über eine Schwenklagerung 9 schwenkbeweglich am inneren und vorzugsweise aus Metall bestehenden Hebelteil 7 gelagert und besitzt in einem Abstand von der Schwenklagerung 9 eine Nase 10, die am äußeren Hebelteil 2 anliegt. Hierzu kann beispielsweise im Innern des äußeren Hebelteils 2 eine nach innen weisende Rippe 11 vorgesehen sein, so daß die Nase 10 direkt in den Zwischenraum zwischen dieser Rippe 11 und dem hinteren Ende des äußeren Hebelteils 2 eingreift, um eine spielfreie und direkte Bewegungskopplung von Betätigungsklinke 8 und äußerem Hebelteil 2 zu erreichen. Wie sich ferner aus Fig. 1 ersehen läßt, ist die Betätigungsklinke 8 mittels einer Druckfeder 12 ständig in ihre in Fig. 1 gezeigte Arretierungsstellung vorbelastet. Die Druckfeder 12 ist hierbei an der Innenfläche des inneren Hebelteils 7, das stationär ist, abgestützt, und das andere Ende der Druckfeder 12 ist in einer Ausnehmung 13 der Betätigungsklinke 8 aufgenommen. Die Vorbelastungseinrichtung, die von der Druckfeder 12 gebildet wird, befindet sich somit geschützt im Innern des Gehäuses, das vom äußeren Hebelteil 2 gebildet wird.

Beim dargestellten Beispiel ist der Handhebel 1 beispielsweise für die Betätigung einer in der Zeichnung nicht näher dargestellten Absperrklappe in Rohrleitungen oder dgl. bestimmt. Mit dieser nicht-gezeigten Absperrklappe beispielsweise ist eine Betätigungswelle 14 verbunden, die zum Verdrehen der Klappe mit Hilfe des Handhebels 1 dient. Mit dieser Betätigungswelle 14 ist das vordere Ende des stationären inneren Hebelteils 7 beispielsweise mit Hilfe einer Schraube 15 fest verbunden, die durch das innere Hebelteil 7 geht und in die Betätigungswelle 14 eingeschraubt ist. Um die Betätigungswelle 14 ist ein ortsfestes Element 16 der Rasteinrichtung angeordnet, das ebenfalls durch die Verbindung der Schraube 15 von innerem Hebelteil 7 und Betätigungswelle 14 fixiert ist. Beim dargestellten, insbesondere aus Fig. 2 deutlich zu ersehenden Beispiel weist das ortsfeste Element 16 der Rasteinrichtung 6 einen Zahnkranz 17 mit nach außen vorspringenden Zähnen 18 auf. Dieser Zahnkranz 17 erstreckt sich um einen Winkelbereich von etwa 100°, wobei die äußeren Zähne des Zahnkranzes 17 eine größere Zahnhöhe als die anderen haben, um zuverlässig eine Überschreitung der Endlagen zu vermeiden. Die Zähne 18 am Zahnkranz 17 sind zweckmäßigerweise derart ausgebildet und angeordnet, daß eine Arretierung in Winkelschritten von jeweils etwa 16° möglich ist. Die am äußeren Hebelteil 2 vorgesehenen Vorsprünge oder Zähne 5 greifen in der Raststellung der Rasteinrichtung 6 in die Zwischenräume zwischen den Zähnen 18 des Zahnkranzes 17 ein, um den Handhebel 1 in seiner gewünschten Stellung zu arretieren.

Hierbei umgreifen die beiden Zähne 5 am äußeren Hebelteil 2 einen der Zähne 18 des Zahnkrenzes 17, so daß eine sichere Arretierung gewährleistet ist.

Wie insbesondere aus Fig. 1 zu ersehen ist, umschließt eine Schutzkappe 20 den Hebelkopfteil 19, so daß die Rasteinrichtung 6 und die Verbindung von innerem Hebelteil 7 und der Betätigungswelle 14 verdeckt sind. Beim dargestellten Beispiel ist in der Schutzkappe 20 im Bereich der Schraube 15 eine Öffnung 21 vorgesehen, in die ein Verschlußteil 22 einsetzbar ist, das beispielsweise in die Schraube 15 eingeschraubt ist. Wenn man dieses Verschlußteil 22 in der Schutzkappe 22 löst, ist die Schraube 15 mit einem Werkzeug von außen zugänglich, die das innere Hebelteil fest mit der Betätigungswelle 14 verbindet. Nach dem Lösen des Verschlußteiles 22 kann die Schutzkappe 20 abgenommen werden, so daß auch die Rasteinrichtung 6 zu Wartungs-und Reparaturzwecken zugänglich ist.

Ferner ist in den Fig. 1 und 2 eine Anzeigeeinrichtung 24 gezeigt, mittels der die Arretierstellung und die Freigabestellung der Rasteinrichtung 6 angezeigt werden. Di-se Anzeigeeinrichtung 24 weist eine schlitzförmigen Öffnung 25 in der Schutzkappe 20 auf, in die eine Vergrößerungslinse 26, beispielsweise eingesetzt ist. Unter Zuordnung zu dieser schlitzförmigen Öffnung 25 trägt der äußere, bewegliche Hebelteil 2 Markierungen 27, die der Arretierstellung oder der Freigabestellung der Rasteinrichtung 6 zugeordnet sind. Diese Markierungen 27 können beispielsweise von nebeneinanderliegenden Farbstreifen auf dem äußeren beweglichen Hebelteil 2 gebildet werden, die über das von der schlitzförmigen Öffnung 25 und die Linse 26 gebildete Sichtfenster der Anzeigeeinrichtung 24 deutlich zu erkennen sind. Zweckmäßigerweise ist Arretierstellung der Rasteinrichtung 6 ein roter Farbstreifen und der Freigabestellung ein grüner Farbstreifen als Merkierung 27 zugeordnet.

Nachstehend wird die Arbeitsweise des Handhebels 1 näher erläutert. In den Fig. 1 und 2 ist der Handhebel 1 in seiner Arretierstellung gezeigt, in der die Zähne 5 am äußeren Hebelteil 2 in zwei aufeinanderfolgenden Vertiefungen zwischen den Zähnen 18 des Zahnkranzes 17 der Rasteinrichtung 6 eingreifen, so daß der Handhebel nicht verdreht werden kann. An der Anzeigeeinrichtung 25 kann dann die Farbe "rot" abgelesen werden. Die Betätigungsklinke 8 steht etwas aus der Öffnung 3 an der unteren Seite des äußeren Hebelteils 2 vor und ihre ergonomisch ausgebildete Oberfläche 30 liegt von dem Handhebel 1 nach unten frei. Die Nase 10 der Betätigungsklinke 8 liegt direkt am äußeren Hebelteil 2 an.

Wenn nun die nicht dargestellte Klappe über die Betätigungswelle 14 verstellt werden soll, umgreift eine Bedienungsperson mit einer Hand das äußere Hebelteil 2 des Handhebels 1 und der Zeige- und Mittelfinger der Hand kommen auf der ergonomisch ausgebildeten Oberfläche 30 der Betätigungsklinke 8 zu liegen. Nunmehr wird mit dem Zeige- und Mittelfinger die Betätigungsklinke 8 in Richtung auf das Innere des äußeren Hebelteils 2 oder in Richtung auf das innere Hebelteil 7 entgegen der Wirkung der Druckfeder zu gedrückt und die Nase 10 der Betätigungsklinke 8 nimmt das äußere Hebelteil 2 um eine kleine Wegstrecke mit. Hierbei wird das äußere Hebelteil 2 längs des inneren Hebelteils 7, wie mit einem Pfeil in den Fig. 1 und 2 dargestellt ist, verschoben und die Zähne oder Vorsprünge 5 am äußeren Hebelteil 2 kommen von den Zähnen 18 der Rasteinrichtung 6 am Hebelkopfteil 19 frei. Nunmehr wird der Handhebel 1 unter Beibehaltung der eingedrückten Stellung der Betätigungsklinke 8 in die gewünschte Stellung verdreht, wobei in der Anzeigeeinrichtung 24 die grüne Markierung 27 zu erkennen ist. Wenn nun die gewünschte neue Stellung des Handhebels 1 erreicht ist, läßt die Bedienungsperson die Betätigungsklinke 8 frei und diese gelangt dann in die in Fig. 1 gezeigte Stellung unter Einwirkung der Druckfeder 12. Die Nase 10 führt hierbei das äußere Hebelteil 2 wieder zurück, und die Vorsprünge oder Zähne 5 am äußeren Hebelteil 2 rasten wieder in die Zwischenräume zwischen den Zähnen 18 des Zahnkranzes 17 ein und der Handhebel 1 ist wiederum in seiner neuen Lage arretiert. In der Anzeigeeinrichtung 24 erscheint dann wieder die rote Farbmarkierung 27.

Obgleich nicht dargestellt ist, kann selbstverständlich der Handhebel 1 auch zur Betätigung anderer Einrichtungen als einer Klappe, wie beim dargestellten Beispiel verwendet werden. Wie gezeigt, ist der Handhebel 1 kompakt ausgebildet, er hat ergonomisch günstig ausgebildete Betätigungsklinke 8 und er ist auch optisch ansprechend ausgelegt. Der äußere Hebelteil 2, der beweglich ist, kann dünnwandig aus Kunststoff hergestellt werden, da der innere Hebelteil 7 aus Metall besteht und auch zusätzlich noch als Versteifung des Handhebels 1 insgesamt dient. Ferner ist die Auslegung auch derart getriffen, daß die beweglichen Teile des Handhebels 1 wenigstens vor Staub geschützt sind, wozu insbesondere die Schutzkappe 20 am Hebelkopfteil 19 vorgesehen ist und der äußere Hebelteil 2 ausgelegt ist und den inneren Hebelteil 7, sowie die Betätigungseinrichtung 4, abgesehen von der ergonomisch ausgebildeten Oberfläche 30 der Betätigungsklinke 8 weitgehend vollständig umschließt.

**Patentansprüche**

1. Handhebel, der in vorbestimmten Stellungen mittels eines durch eine Betätigungsklinke (8) ein- und ausrückbares Rastelement (5) arretierbar ist, mit einem ersten Hebelteil (7), das mit einen zu betätigenden Element verbunden ist, und einem zweiten Hebelteil (2), das mittels der Betätigungsklinke (8) relativ zum ersten Hebelteil (7) längsverschieblich ist, und das an seinem dem Element zugewandten Ende das Rastelement (5) trägt, wobie die Betätigungsklinke (8) am freien Ende des Handhebels (1) schwenkbeweglich am ersten Hebelteil (7) gelagert und in ihrer Arretierungsstellung federvorbelastet ist, dadurch gekennzeichnet, daß das zu betätigende Element eine Einrichtung ist die mit einer Klappe in einer Rohrleitung fest verbunden ist, daß das erste Hebelteil (7) innerhalb des zweiten Hebelteils (2) angeordnet ist und daß die Betätigungsklinke (8) in einem Abstand von ihrer Schwenklagerung (9) eine Nase (10) hat, die das äußere Hebelteil (2) mitnimmt.

2. Handhebel nach Anspruch 1, dadurch gekennzeichnet, daß die Betätigungsklinke (8) an der Unterseite des Handhebels (1) angeordnet ist und ihr freies Ende in Richtung zu der Einrichtung (14) weist.

3. Handhebel nach Anspruch 1 oder 2, dadurch gekennzeichnet, daß die Betätigungsklinke (8) zum Ausrücken des Rastelementes (5) in Richtung auf das innere Hebelteil (7) bewegbar ist.

4. Handhebel nach einem der Ansprüche 1 - 3, dadurch gekennzeichnet, daß zur Federvorbelastung der Betätigungsklinke (8) in ihrer Arretierungsstellung eine Schraubendruckfeder (12) vorgesehen ist, die einerseits am inneren Hebelteil (7) und andererseits an der Betätigungsklinke (8) anliegt.

5. Handhebel nach einem der Ansprüche 1 - 4, dadurch gekennzeichnet, daß die Betätigungskline (8) eine ergonomisch ausgebildete Oberfläche (30) hat.

6. Handhebel nach einem der vorangegangenen Ansprüche, dadurch gekennzeichnet, daß eine Rasteinrichtung (6) am äußeren Hebelteil (2) wenigstens zwei Rastelemente (5) besitzt, die mit entsprechend komplementär ausgebildeten Ausnehmungen an einem ortsfesten Rastelement (16) zusammenwirken.

7. Handhebel nach Anspruch 6, dadurch gekennzeichnet, daß das ortsfeste Rastelement (16) einen Zahnkranz (17) aufweist, der sich über wenigstens einen Teil seines Umfanges erstreckt, und daß die hiermit zusammenarbeitenden Rastelemente (5) als hierzu komplementär ausgebildete Zähne ausgelegt sind.

8. Handhebel nach Anspruch 6 oder 7, dadurch gekennzeichnet, daß der Handhebel (1) mittels der Rasteinrichtung (6) in Winkelschritten von jeweils etwa 16° arretierbar ist.

9. Handhebel nach einem der vorangehenden Ansprüche, gekennzeichnet durch eine Schutzkappe (20), welche die Rasteinrichtung (6) und die Einrichtung (14) sowie die Verbindung vom inneren Hebelteil (7) mit der Letzteren umschließt.

10. Handhebel nach einem der vorangehenden Ansprüche, gekennzeichnet durch eine Anzeigeeinrichtung (24) für die eingerückte Arretierungs- und die ausgerückte Freigabestellung des Handhebels (1).

11. Handhebel nach Anspruch 10, dadurch gekennzeichnet, daß als Anzeigeeinrichtung (24) in der Schutzkappe (20) eine Öffnung (25) vorgesehen ist und auf dem äußeren, beweglichen Hebelteil (2) entsprechende Anzeigeelemente für die Arretierungs- und Freigabestellung vorgesehen sind.

12. Handhebel nach Anspruch 11, dadurch gekennzeichnet, daß in die Öffnung (25) eine Linse (26) eingesetzt ist.

13. Handhebel nach Anspruch 11 oder 12, dadurch gekennzeichnet, daß die Anzeigeelemente (27) von Farbmarkierungen, wie rot oder grün, gebildet werden.

14. Handhebel nach einem der vorangehenden Ansprüche, dadurch gekennzeichnet, daß der innere Hebelteil (7) einen U-profilförmigen Querschnitt hat.

15. Handhebel nach einem der vorangehenden Ansprüche, dadurch gekennzeichnet, daß der äußere Hebelteil (2) den inneren Hebelteil (7) gehäuseartig umschließt.

16. Handhebel nach einem der vorangehenden Ansprüche, dadurch gekennzeichnet, daß der äußere Hebelteil (2) aus Kunststoff besteht.

17. Handhebel nach einem der vorangehenden Ansprüche, dadurch gekennzeichnet, daß der innere Hebelteil (7) aus Metall besteht.

## Claims

1. Hand lever, which can be locked in predetermined positions by means of af an engaging and disengaging latching element (5) through an actuating pawl (8), with a first lever part (7), which is connected with an element to be actuated (14), and with a second lever part (2), which can be shifted longitudinally relatively to the first lever element (7), and which carries the latching element (5) on its end facing the element (14), whereby the actuating pawl (8) rests on the free end of the hand lever (1) rotatively to the first lever part (7) and is spring-preloaded in its locked position, thereby characterized that the element (14) to be actuated is a device, which is solidly connected with a valve in a pipeline, that the first lever part (7) is arranged within the second lever part (2), and the actuating pawl (8) has a lug (10) at a distance from its rotary support, which drives the exterior lever part (2).

2. Hand lever according to Claim 1, thereby characterized, that the actuating pawl (8) is located on the lower side of the hand lever (1), and its free end points in direction toward the device (14).

3. Hand lever according to Claim 1 or 2, thereby characterized that the actuating pawl (8) is movable for disengaging the latching element (5) in direction toward the interior lever part (7).

4. Hand lever according to one of the Claims 1 - 3, thereby characterized that a compression spring (12) is provided for the spring preloading of the actuating pawl (8) in its locking position, which rests against the interior lever part (7) on the one side and against the actuating pawl (8) on the other.

5. Hand lever according to one of the Claims 1 - 4, thereby characterized that the actuating pawl (8) has an ergonomically designed surface (3).

6. Hand lever according to one of the preceding Claims, thereby characterized that a latching device (6) on the exterior lever part (2) has at least two locking elements (5), which interact with correspondingly complementarily designed recesses on a stationary latching element (16).

7. Hand lever according to Claim 6, thereby characterized that the stationary latching element (16) has a toothed rim (17), which extends for at least one part of its circumference, and that the latching elements (5) interacting herewith are designed as thereto complementarily constructed teeth.

8. Hand lever according to Claim 6 or 7, thereby characterized that the hand lever (1) can be locked by means of the latching device (6) in angular steps of around $16°$ each.

9. Hand lever according to one of the preceding Claims, thereby characterized by a protective cap (20), which envelops the latching device (6) and the device (14) as well as the connection of the interior lever part (7) with the latter.

10. Hand lever according to one of the preceding Claims, characzierized by an indicator (24) for the engaged locking and the disengaged release position of the hand lever (1)

11. Hand lever according to Claim 10, thereby characterized that an opening (25) is provided as indicator (24) in the protective cap and appropriate indicator elements for the locking and release position are provided on the exterior movable lever part (2).

12. Hand lever according to Claim 11, thereby characterized that a lens (26) is inserted into the opening (25).

13. Hand lever according to Claim 11 or 12, thereby characterized that the indicator elements (27) are formed by color markings, such as red

14. Hand lever according to one of the preceding Claims, thereby characterized that the interior lever part (7) has a U-shaped cross section.

15. Hand lever according to one of the preceding Claims, thereby characterized that the exterior lever part (2) encloses the interior lever part (7) like a housing.

16. Hand lever according to one of the preceding Claims, thereby characterized that the exterior lever part (2) consists of plastic.

17. Hand lever according to one of the preceding Claims, thereby characterized that the interior lever part (7) consists of metal.

**Revendications**

1. Levier à main susceptible d'être arrêté dans des positions prédéterminées à l'aide d'un élément d'arrêt (5) à entrer et à sortir par un cliquet d'actionnement (8), avec une première section de levier (7) reliée avec un élément (14 à actionner et avec une deuxième section de levier (2) déplacable longitudinalement et relativement à la première section de levier par le cliquet d'actionnement (8) et qui à son extrémité dirigée vers l' élément (14) porte l'élément d'arrêt (5) et où le cliquet d'actionnement (8) à l'extrémité libre du levier à main (1) est pivotable à la première section de levier (7) et chargé par un ressort dans sa position d'arrêt, **caractérisé** en ce que l'élément (14) à actionner représente un équipement relié rigidement avec un clapet dans une tuyauterie, puis, que la première section de levier (7) est aménagée à l'intérieur de la deuxième section de levier (2) et que le cliquet d'actionnement (8) présente un nez (10) écarté de son support pivotant, nez entraînant la section extérieure de levier (2).

2. Levier à main, conformément à la revendication 1, caractérisé en ce que le cliquet d'actionnement (8) est aménagé à la partie inférieure du levier à main (1) et que leur extrémité libre est dirigée vers l'équipement (14)

3. Levier à main, conformément à la revendication 1 ou 2, caractérisé en ce que le cliquet d'actionnement (8) est susceptible d'être déplacé, pour décliqueter l'élément d'arrêt (5), vers la section interne de levier (7).

4. Levier à main, conformément à une des revendications 1 à 3, caractérisé en ce que, pour la charge par ressort du cliquet d'actionnement (8) dans sa position d'arrêt, un ressort à boudin (12) est prévu, ressort appliqué d'un part à la section interne de levier (7), d'autre part au cliquet d'actionnement (8).

5. Levier à main, conformément à une des revendications 1 à 4, caractérisé en ce que le cliquet d'actionnement (8) présente une surface (3) ergonomique.

6. Levier à main, conformément à une des revendications précitées, caractérisé en ce qu'un équipement d'arrêt (6), comporte, à la section extérieure de levier (2) au moins deux éléments d'arrêt (5) coopérant avec des évidements complémentaires correspondants sur un élément d'arrêt fixe (16).

7. Levier à main, conformément à la revendication 6, caractérisé en ce que l'élément d'arrêt (16) fixe comporte une couronne dentée (17) s'étendant au moins le long d' une partie de sa périphérie et que les éléments d'arrêt (5) coopérants sont dimensionnés en tant que dents complémentaires.

8. Levier à main, conformément à la revendication 6 ou 7, caractérisé en ce que le levier à main (1) est susceptible d'être arrêté, par l'équipement d'arrêt (6), et ce selon des pas angulaires d'environ 16° chacun.

9. Levier à main, conformément à une des revendications précitées, caractérisé par un capot de protection (20) renfermant l'équipement d'arrêt (6) et l'équipement (14) ainsi que la liaison entre la section interne de levier (7) et ce dernier.

10. Levier à main, conformément à une des revendications précitées, caractérisé par un équipement d'affichage (24) pour la position rentrée d'arrêt et la position sortie de libération du levier à main (1).

11. Levier à main, conformément à la revendication 10, caractérisé par le fait qu'en tant qu'équipement d'affichage (24) une ouverture (25) est prévue dans le capot de protection (20) et, sur la section extérieure mobile de levier (2), des éléments correspondants d'affichage pour la position d'arrêt et la position de libération.

12. Levier à main, conformément à la revendication 11, caractérisé en ce qu'une lentille (26) est insérée dans l'ouverture (25).

13. Levier à main, conformément à la revendication 11 ou 12, caractérisé en ce que les éléments d'affichage (27) sont constitués par des repères de couleur rouges ou verts.

14. Levier à main, conformément à une des revendications précitées, caractérisé en ce que la section interne de levier (7) présente une section à profilé en U.

15. Levier à main, conformément à une des revendications précitées, caractérisé en ce que la section externe de levier (2) renferme la section interne de levier (7) sous forme d'un boîtier.

16. Levier à main, conformément à une des revendications précitées, caractérisé en ce que la section externe de levier (2) est en matière plastique.

17. Levier à main, conformément à une des revendications précitées, caractérisé en ce que la section interne de levier (7) est en métal.

FIG. 1

FIG. 2

EP 0 284 940 B1